# EUROPÄISCHE PATENTSCHRIFT

(11) **EP 2 427 353 B1**
(45) Veröffentlichungstag und Bekanntmachung des Hinweises auf die Patenterteilung: **09.09.2015**
(21) Anmeldenummer: 10708208.3
(22) Anmeldetag: 12.03.2010
(51) Int. Cl.: B60S 1/16

(54) **SCHEIBENWISCHERVORRICHTUNG**
WINDSCREEN WIPER DEVICE
DISPOSITIF D'ESSUIE-GLACES

(30) Priorität: 06.05.2009 DE 102009002842
(43) Veröffentlichungstag der Anmeldung: 14.03.2012
(73) Patentinhaber: Robert Bosch GmbH, 70442 Stuttgart (DE)
(72) Erfinder: MAIER, Wolfgang, 71732 Tamm (DE); SEIERT, Paul, 77815 Buehl (DE); FRIDERICHS, Guenther, 77836 Schwarzach (DE); HOHL, Ulrich, 74080 Heilbronn (DE); STERNS, Orlando, 76131 Karlsruhe (DE); GEUBEL, Paul, 76534 Baden-Baden (DE); FEES, Heiner, 74321 Bietigheim-Bissingen (DE)
(86) Internationale Anmeldenummer: PCT/EP2010/053185
(87) Internationale Veröffentlichungsnummer: WO 2010/127890

(56) Entgegenhaltungen:
- EP-A2- 2 072 357
- US-A- 2 121 233
- US-A- 3 282 120
- US-A- 5 979 254

## Beschreibung

Die vorliegende Erfindung betrifft eine Scheibenwischervorrichtung, insbesondere für einen Heckscheibenwischer eines Kraftfahrzeugs, mit einem Wischermotor, der über eine in einem Getriebegehäuse aufgenommene Getriebeanordnung eine einen Wischhebel betätigende Abtriebswelle antreibt, wobei die Getriebeanordnung zur Übertragung einer rotatorischen Bewegung des Wischermotors in eine oszillierende Drehbewegung der Abtriebswelle ein Umsetzgetriebe aufweist, welches eine Schubstange und einen gelenkig mit der Schubstange verbundenen Steg umfasst, der ein Zahnsegment äquidistant drehfest mit der Abtriebswelle verbundenen Ritzel hält, mit welchem das Zahnsegment kämmt.

Derartige Scheibenwischervorrichtungen sind allgemein bekannt und beispielsweise in der DE 10 014 735 A1 beschrieben. Dieses Dokument beschreibt einen Heckwischerantrieb, bei dem ein Elektromotor eine Ankerwelle konstant in eine Drehrichtung antreibt. Die Ankerwelle trägt eine Schnecke, die wiederum ein Schneckenrad antreibt. Eine Schubstange ist über einen Gelenkbolzen gelenkig mit dem Schneckenrad verbunden. An der Schubstange ist ein Zahnsegment ausgebildet, welches mit einem an einer Abtriebswelle drehfest angeordneten Ritzel kämmt. Um den Abstand zwischen Zahnsegment und Ritzel konstant zu halten, ist im Zentrum des Zahnsegments in der Schubstange eine Bohrung vorgesehen, in die ein Gelenkbolzen zur gelenkigen Befestigung des Steges eingesetzt ist. Der Steg ist wiederum mit der Abtriebswelle verbunden und daran gelagert, so dass eine nahezu gleichbleibende Beabstandung von Ritzel und Zahnsegment über deren gesamte Auslenkung hinweg gewährleistet ist, ohne dabei die Bewegung der Schubstange bzw. des Zahnsegments zu beeinträchtigen.

Die heute üblicherweise eingesetzten Umsetzgetriebe sind aus fertigungstechnischen Gründen zur Reduzierung des Platzbedarf sowie des Gewichts sehr klein ausgeführt und die verschiedenen übertragenden Bauteile teilweise übereinander angeordnet, was dazu führt, dass durch die während des Betriebes auftretenden und auf das Umsetzgetriebe einwirkenden großen Kräften große Querkräfte zwischen den übereinander angeordneten Bauteilen erzeugen, was zu hohem Verschleiß, zu einem Wirkungsgradverlust und im schlimmsten Fall zu Beschädigungen und Verformungen bis hin zu einem Bruch der Bauteile führen kann.

Durch die kleine Ausführung und die Vielzahl der teilweise übereinander angeordneten Bauteile in den üblichen Umsetzgetrieben entstehen des weiteren große Getriebespiele, die an der Antriebswelle und damit am Wischhebel auf der Windschutzscheibe sichtbar werden. Je größer das Getriebespiel im Neuzustand ist, desto höher ist die Zunahme des Getriebespiels über die Lebensdauer des Bauteils hinweg. Dies führt dazu, dass die anfangs nur sehr unterschwellig durch den Nutzer wahrgenommene unterschiedliche Bewegung des Wischerarms auf der Windschutzscheibe im Laufe der Lebensdauer des Bauteils immer deutlicher wahrnehmbar wird.

Ein weiterer bei den derzeit eingesetzten Umsetzgetrieben beobachteter Nachteil besteht darin, dass bei verschiedenen Witterungsverhältnissen kein symmetrischer, sinusförmiger Bewegungsablauf durch den Wischerarm ausgeführt wird. Beobachtungen zeigen, dass je kleiner die Baugröße des Getriebes und je größer der zu generierende Wischwinkel ist, desto unsymmetrischer wirkt sich dies auf die Beschleunigung des Wischerarms auf der Heckscheibe aus. Bei starker Wasserbeaufschlagung erfährt der Wischhebel auf der Scheibe einen geringeren Widerstand, wodurch der Wischhebel einen großen Wischwinkel beschreiben kann. Bei Abnahme des Regens bis hin zu einer nahezu trockenen Scheibe wird der Wischwinkel je nach Wasserbeaufschlagung wegen der zunehmenden Reibungseffekte immer kleiner. Dieser Umstand stört den subjektiven Eindruck bezüglich der Symmetrie des Bewegungsablaufs. Es ergeben sich ferner einseitige Stromerhöhungen im Betrieb und die Modulation des Betriebsgeräusches wird verstärkt.

Eine Vorrichtung mit den Merkmalen des Oberbegriffs des Anspruchs 1 ist aus dem Dokument US-A-2121233 bekannt.

Es ist daher Aufgabe der vorliegenden Erfindung, eine Scheibenwischervorrichtung bereitzustellen, die eine gleichförmigere Bewegung des Wischerarms auf der Windschutzscheibe, insbesondere der Heckscheibe ermöglicht und dabei gleichzeitig die Lebensdauer des Bauteils erhöht.

Diese Aufgabe wird erfindungsgemäß durch die Vorrichtung nach Anspruch 1 gelöst.

Die ortsfeste Lagerung des Steges in dem Getriebegehäuse führt zu einer Stabilisierung des Umsetzgetriebes, da im Stand der Technik auftretende Vertikalbewegungen des Steges beispielsweise aufgrund von Querkräften nunmehr vom Getriebegehäuse direkt aufgenommen und darüber abgeführt werden können. Dies führt zu einer höheren Genauigkeit des Umsetzgetriebes und damit zu einer geringeren Seriensteuerung des Wischwinkels. Durch die damit verbundene Verringerung der Belastung der kraftübertragenden Bauteile wird eine Steigerung der Lebensdauer und eine Verringerung der Verzahnungsspiele erreicht, was wiederum zu einer geringeren Verschleißneigung und zu einer geringeren Toleranzempfindlichkeit des Umsetzgetriebes führt.

Ferner wird durch die ortsfeste Lagerung des an dem Steg ausgebildeten oder angeordneten Zahnsegmentes ein stabilerer Bewegungsablauf erreicht, was einem symmetrischen und möglichst sinusförmigen Bewegungsablauf sehr zuträglich ist.

Dieser Effekt wird dadurch gesteigert, dass der Kraftfluss zwischen dem an der Abtriebswelle drehfest angeordneten Ritzel und dem an dem Steg ausgebildeten Zahnsegments bei entsprechender Anordnung innerhalb des Getriebegehäuses in einer Ebene erfolgen. Als Folge werden Querkräfte zwischen Ritzel und Zahnsegment vermindert bzw. komplett ausgeschaltet, was zu geringeren Reibungsverlusten zwischen den kraftübertragenden Bauteilen und damit zu einer Steigerung des Wirkungsgrades der Scheibenwischervorrichtung führt.

In einem weiteren Ausführungsbeispiel der vorliegenden Erfindung ist der Steg zur Reduzierung der Teilevielfalt einteilig mit dem Zahnsegment ausgebildet. Dies hat ferner den Vorteil, dass eine Übersetzung des Umsetzgetriebes durch einfachen Austausch des Steges und des daran ausgebildeten Zahnsegmentes variiert werden kann. Alle anderen Bauteile des Umsetzgetriebes können im Zweifelsfalle unverändert bleiben. Gegebenenfalls kann ein Austausch des Ritzels aufgrund stark abweichender Zahngeometrien des Zahnsegmentes notwendig sein. Sämtliche anderen Bauelemente können vollständig unverändert in der Scheibenwischervorrichtung verbleiben.

Natürlich können Steg und Zahnsegment auch als separate Bauteile ausgeführt und so gelenkig oder auch drehfest miteinander verbunden sein, dass das Zahnsegment uneingeschränkt entlang seines Aktionsradius durch die Schubstange bewegbar ist und gleichzeitig vom Steg äquidistant zu dem Ritzel gehalten wird.

Eine besonders günstige Anordnung der kraftübertragenden Bauteile in dem Getriebegehäuse sieht vor, dass der Steg und das Ritzel und/oder das Schneckenrad und/oder die Ankerwelle in einer gemeinsamen Ebene und somit mit Ausnahme der Schubstange auch in einer gemeinsamen Kraftübertragungsebene in dem Getriebegehäuse anordnet sind. Dadurch wird erreicht, dass Querkräfte im Bereich des Kraftflusses nahezu vollständig ausgeschlossen werden können, was wie gesagt zu einer Verminderung der Verluste durch Reibung und damit zu einer Steigerung des Wirkungsgrades führen kann.

Zweckmäßiger Weise kann der Steg so in das Getriebegehäuse eingesetzt werden, dass mindestens ein Wandungsabschnitt des Getriebegehäuses eine Anschlagfläche zur Begrenzung der maximalen Auslenkung des Steges bzw. des Zahnsegmentes bildet. Hierdurch wird eine Reduzierung der Teilevielfalt dadurch erreicht, dass es nicht mehr notwendig ist, zum einen Bohrungen für das Einsetzen von Anschlagelementen in dem Getriebegehäuse vorzusehen. Zum anderen wird hierdurch bei Anschlag des Zahnsegmentes oder des Steges in deren Endlagen eine gleichmäßige Kraftverteilung auf die jeweilige Anschlagfläche des Wandungsabschnitts des Getriebegehäuses garantiert, was einer Beschädigung des Steges bzw. des Anschlagelementes innerhalb des Getriebegehäuses aufgrund der nunmehr flächigen Kraftverteilung stark entgegenwirkt.

Um eine möglichst homogene Übertragung der rotatorischen Bewegung des Wischermotors bzw. des über eine durch den Wischermotor in Drehung versetzte Ankerwelle angetriebenen Schneckenrades auf die Schubstange zu gewährleisten, greift die Schubstange zur gelenkigen Verbindung mit dem Schneckenrad mit einem Gelenkbolzen in eine der mehreren in dem Schneckenrad vorgesehenen Exzenterbohrung ein.

Das Schneckenrad weist mehrere Exzenterbohrungen auf, die jeweils zu einer Rotationsachse des Schneckenrades unterschiedlich beabstandet angeordnet sind. Durch Wahl einer entsprechenden Exzenterbohrung wird eine Übersetzung zwischen Zahnsegment und Ritzel zu verändern und darüber verschiedene Wischwinkel einzustellen. Alternativ können auch mehrere Aufnahmebohrung in dem Zahnsegment bzw. Steg vorgesehen sein, in denen die Schubstange gelenkig befestigbar ist, um ein bestimmtes Übersetzungsverhältnis abhängig von der Befestigungsposition im Steg einzustellen. Eine weitere Möglichkeit, ein Übersetzungsverhältnis zwischen Ritzel und Zahnsegment einzustellen, bietet die Wahl bzw. Änderung der Zahngeometrie von Ritzel bzw. Zahnsegment. Beispielsweise kann durch Vergrößerung der Zahndicke der Zähne von Zahnsegment und/oder Ritzel ein Übersetzungsverhältnis gesteigert werden.

Zur weiteren Stabilisierung der Bewegung des Steges bzw. des Zahnsegments ist in einem weiteren Ausführungsbeispiel in dem Getriebegehäuse unterhalb des Steges eine kreisbogenförmige Vertiefung ausgebildet, in welche ein an dem Steg ausgebildeter Vorsprung zur Stablilisierung der gleichförmigen Drehbewegung des Steges und/oder zur Beibehaltung der Beabstandung von Steg und Ritzel eingreift.

Alternativ kann in dem Getriebegehäuse unterhalb des Steges ein kreisbogenförmiger Vorsprung ausgebildet sein, wobei ein an dem Steg komplementär ausgebildeter Vorsprung zur Stabilisierung der gleichförmigen Drehbewegung des Steges und/oder zur Beibehaltung der Beabstandung von Zahnsegment und Ritzel den Vorsprung hintergreift. Hinsichtlich weiterer vorteilhafter Ausgestaltungen der Erfindung wird auf die Erläuterung der beigefügten Zeichnungen sowie die Unteransprüche verwiesen.

Es zeigen
- Figur 1: eine perspektivische Teildarstellung einer Scheibenwischervorrichtung gemäß dem Stand der Technik;
- Figur 2: eine perspektivische Darstellung einer erfindungsgemäßen Scheibenwischervorrichtung; und
- Figur 3: eine perspektivische Darstellung eines erfindungsgemäßen Umsetzgetriebes mit montierter Abtriebswelle.

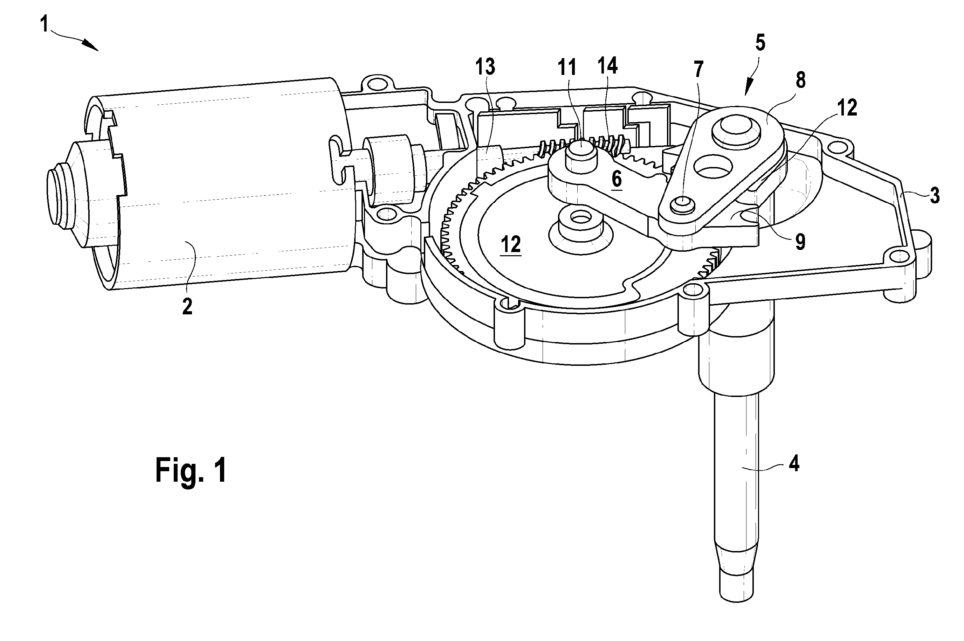

Figur 1 zeigt eine perspektivische Darstellung einer Scheibenwischervorrichtung 1 für einen Heckscheibenwischer eines Kraftfahrzeuges gemäß dem Stand der Technik. Die Scheibenwischervorrichtung 1 weist einen Wischermotor 2 auf, der über eine in einem Getriebegehäuse 3 aufgenommene Getriebeanordnung eine Abtriebswelle 4 antreibt, über welche ein nicht dargestellter Wischhebel auf einer Windschutzscheibe des Kraftfahrzeuges hin- und herbewegbar ist. Die Getriebeanordnung weist zur Übertragung einer rotatorischen Bewegung des Wischermotors 2 in eine oszillierende Drehbewegung der Abtriebswelle 4 ein Umsetzgetriebe 5 auf. Das Umsetzgetriebe 5 weist eine Schubstange 6 sowie einen über einen Befestigungsbolzen7 gelenkig mit der Schubstange 6 verbundenen Steg auf. An der Schubstange 6 ist ein Zahnsegment 9 ausgebildet, welches mit einem drehfest an der Abtriebswelle 4 gelagerten Ritzel 10 kämmt. Das Zahnsegment 9 ist einteilig mit der Schubstange 6 ausgebildet. Der Abstand des Zahnsegments 9 zu einem drehfest mit der Abtriebswelle 4 verbundenen Ritzel 10 wird bei einer Hub-Pendel-Bewegung der Schubstange 6 durch den Steg 8 konstant gehalten.

Die Schubstange 6 ist an einem dem Zahnsegment 9 gegenüber liegenden Ende über einen weiteren Befestigungsbolzen 11 gelenkig in einem Schneckenrad 12 exzentrisch gelagert. Um eine pendelnde Bewegung des nicht dargestellten Wischerarms zu erzeugen, treibt der Wischermotor 2 eine Ankerwelle 13 an, an der eine Schnecke 14 ausgebildet ist. Die Schnecke 14 kämmt wiederum in der Stirnverzahnung des Schneckenrades 12. Somit führt das Schneckenrad 12 eine kontinuierliche Rotationsbewegung aus, die durch eine bezogen auf die Rotationsachse des Schneckenrads 12 exzentrische Gelenkverbindung zwischen der Schubstange 6 und dem Schneckenrad 12 in eine Hub-Pendel-Bewegung der Schubstange 6 überführt wird. Die Hub-Pendel-Bewegung der Schubstange 6 wird über das mit dem Zahnsegment 9 kämmende Ritzel 10 in eine Pendeldrehung der mit dem Ritzel 10 drehfest verbundenen Abtriebswelle 4 überführt, woraus sich eine pendelnde Bewegung des nicht dargestellten Wischerhebels einstellt. So kann durch den Einsatz des Umsetzgetriebes 5 aus einer rein rotatorischen Bewegung eine pendelnde Drehbewegung der Abtriebswelle 4 um beispielsweise 180° erzeugt werden.

In Figur 1 ist deutlich zu sehen, dass die Stirnverzahnung des Schneckenrades in einer anderen Ebene liegt als das Zahnsegment sowie das Ritzel. Dies ruft unweigerlichQuerkräfte bei der Übertragung der Kraft von Schneckenrad auf Zahnsegment und Ritzel hervor. Ferner wird das reibungs- und bruchempfindliche Zahnsegment allein durch den Steg 8 in seiner Position gegen auftretende Querkräfte gehalten, woraus sich nicht unerhebliche Hebelkräfte ergeben können, durch die wiederum ein relativ großes Getriebespiel hervorgehen kann. Dieses Getriebespiel wird wiederum an der Antriebswelle sichtbar und kann sich negativ auf die Lebensdauer des Bauteils auswirken.

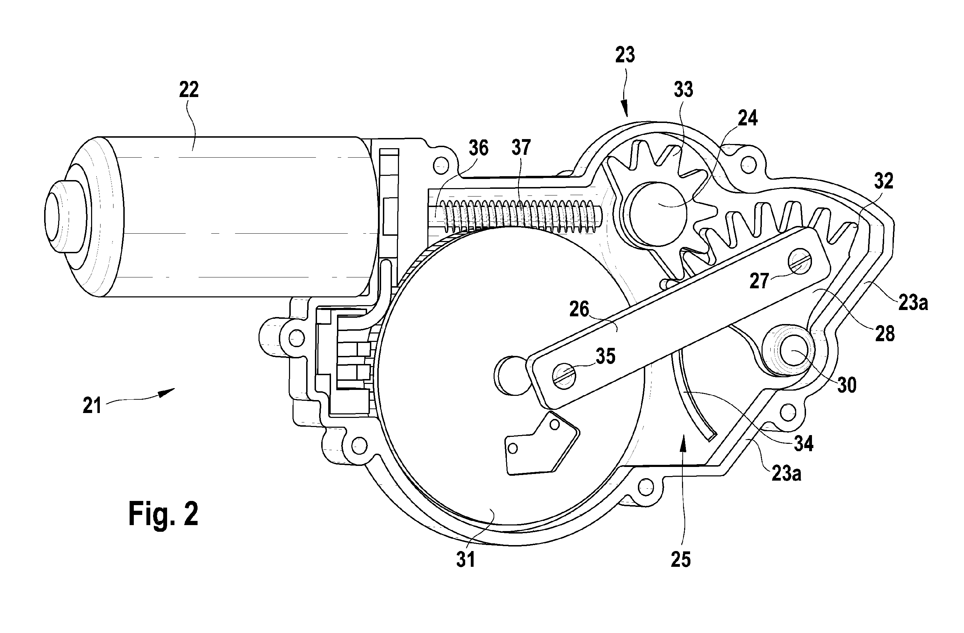

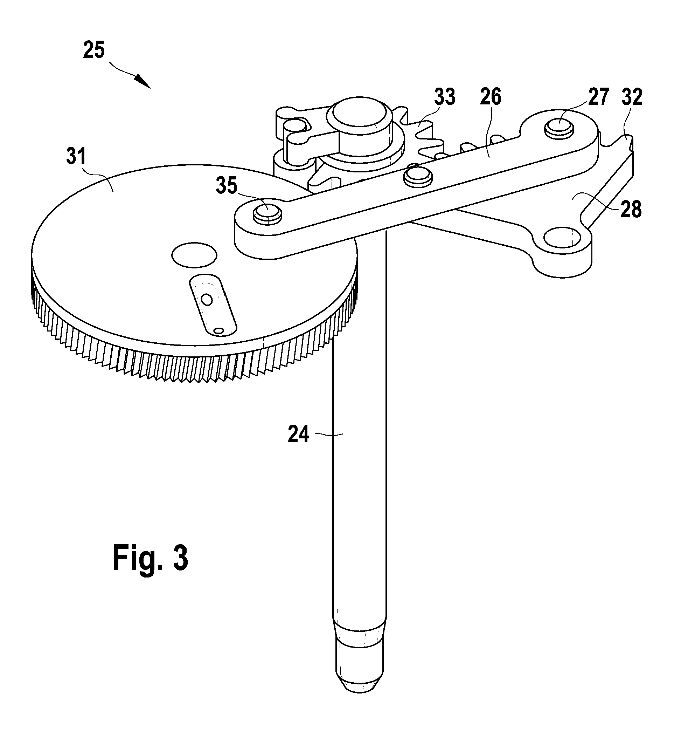

Die erfindungsgemäße Scheibenwischervorrichtung 21 gemäß Figur 2 tritt diesen Effekten mit folgendem Aufbau entgegen. Die Scheibenwischervorrichtung 21 weist einen Wischermotor 22 auf, der über eine in einem Getriebegehäuse 23 aufgenommene Getriebeanordnung eine einen nicht dargestellten Wischhebel betätigende Abtriebswelle 24 antreibt. Die Getriebeanordnung weist zur Übertragung der rotatorischen Bewegung des Wischermotors 22 in eine oszillierende Drehbewegung der Abtriebswelle 24 ein Umsetzgetriebe 25 auf (siehe auch nähere Darstellung in der Figur 3), welches hier ebenfalls eine Schubstange 26 sowie einen über einen Befestigungsbolzen 27 gelenkig mit der Schubstange 26 verbundenen Steg 28 aufweist.

Der Steg 28 ist beabstandet von der Rotationsachse der Abtriebswelle 24 über einen lösbaren Gelenkbolzen 30 ortsfest in dem Getriebegehäuse 23 drehbar gelagert und über die Schubstange 26 gelenkig mit einem Schneckenrad 31 verbunden. Das Getriebegehäuse 23 ist in diesem Ausführungsbeispielzur flächigen Begrenzung und Aufnahme des Steges 28 in seinen Endlagen so geformt, dass sie Anschlagflächen 23a für den Steg 28 bilden.

An dem Steg 28 ist ein Zahnsegment 32 vorgesehen, welches mit dem an der Abtriebswelle 24 drehfest angebrachten Ritzel 33 kämmt. Das Zahnsegment 29 ist in diesem Ausführungsbeispiel einteilig mit dem Steg 28 ausgebildet.

Unterhalb des Steges 28 ist in dem Getriebegehäuse 23 eine kreisbogenförmige Vertiefung 34 ausgebildet, in welche ein an dem Steg 28 vorgesehener, nicht dargestellter Vorsprung zur Stabilisierung des gleichförmigen Drehbewegung des Steges 28 und zur Sicherung der Beibehaltung der Beabstandung von Steg 28 und Ritzel 33 eingreift. Die Vertiefung 34 ist dabei so ausgebildet, dass sie die durch die Hub-Pendel-Bewegung der Schubstange 26 hervorgerufene optimale Pendelbewegung des Steges 28 nachbildet. An einem dem Zahnsegment 32 gegenüber liegenden Ende ist die Schubstange 26 über einen weiteren Befestigungsbolzen 35 gelenkig in dem Schneckenrad 31 exzentrisch gelagert.

Der Steg 28, das mit dem Zahnsegment 32 kämmende, drehfest mit der Abtriebswelle 24 verbundene Ritzel 33 sowie das den Steg 28 über die Schubstange 26 antreibende, sich rotatorisch bewegende Schneckenrad 31 sowie die vom Wischermotor 22 angetriebene Ankerwelle 36 sind in einer gemeinsamen Ebene in dem Getriebegehäuse 23 angeordnet. Somit erfolgt der Kraftübertragungsfluss vom Wischermotor 22 über die mit einer Schnecke 37 versehene Ankerwelle 36 auf das Schneckenrad 31 und die Übertragung vom Steg 28 auf das Zahnsegment 32 und das Ritzel 33 mit Ausnahme der Übertragung der Bewegung vom Schneckenrad 31 über die Schubstange 26 auf den Steg 28 in einer Kraftebene, so dass die Entwicklung von Querkräften weitestgehend unterdrückt werden kann. Durch die ortsfeste Lagerung des Steges 28 in dem Getriebegehäuse 23 ist eine weitere Sicherung des Umsetzgetriebes 25 gegen die Einwirkung von Querkräften gegeben, da eventuell auf dem Kraftübertragungsweg dennoch auftretende Querkräfte über die Lagerung des Steges 28 im Getriebegehäuse 23 aufgenommen und darüber auch abgeführt werden können. So wird ein stabilerer Bewegungsablauf erreicht, was einen symmetrischen und möglichst sinusförmigen Bewegungsablauf hervorruft.

Um eine pendelnde Bewegung des nicht dargestellten Wischerarms zu erzeugen, treibt der Wischermotor 22 die Ankerwelle 36 und damit auch die Schnecke 37 an, die wiederum mit einer Stirnverzahnung des Schneckenrades 31 kämmt. Somit führt das Schneckenrad 31 eine kontinuierliche Rotationsbewegung aus, die durch eine bezogen auf die Rotationsachse des Schneckenrads 31 exzentrische Gelenkverbindung zwischen der Schubstange 26 und dem Schneckenrad 31 in eine Hub-Pendel-Bewegung der Schubstange 26 überführt wird. Die Hub-Pendel-Bewegung der Schubstange 26 wird über das mit dem Zahnsegment 32 kämmende Ritzel 33 in eine Pendeldrehung der mit dem Ritzel 33 drehfest verbundenen Abtriebswelle 24 überführt, woraus sich eine pendelnde Bewegung des nicht dargestellten Wischerhebels einstellt. So kann durch den Einsatz des Umsetzgetriebes 25 aus einer rein rotatorischen Bewegung eine pendelnde Drehbewegung der Abtriebswelle 4 um beispielsweise 180° erzeugt werden.

## Patentansprüche

1. Scheibenwischervorrichtung (1, 21), insbesondere für einen Heckscheibenwischer eines Kraftfahrzeugs, mit einem Wischermotor (2, 22), der über eine in einem Getriebegehäuse (3, 23) aufgenommene Getriebeanordnung eine einen Wischhebel betätigende Abtriebswelle (4, 24) antreibt, wobei die Getriebeanordnung zur Übertragung einer rotatorischen Bewegung des Wischermotors (2, 22) in eine oszillierende Drehbewegung der Abtriebswelle (4, 24) ein Umsetzgetriebe (5, 25) aufweist, welches eine Schubstange (6, 26) und einen gelenkig mit der Schubstange (6, 26) verbundenen Steg (8, 28) umfasst, der ein Zahnsegment äquidistant zu einem drehfest mit der Abtriebswelle (24) verbundenen Ritzel (10, 33) hält, mit welchem das Zahnsegment kämmt, wobei der Steg beabstandet von einer Rotationsachse der Abtriebswelle (4, 24) ortsfest in dem Getriebegehäuse (3, 23) drehbar gelagert ist, wobei der Steg (8, 28) und das Ritzel (10, 33) und/oder ein Schneckenrad (12, 31) und/oder die Ankerwelle (36) in einer gemeinsamen Ebene, insbesondere in einer gemeinsamen Kraftübertragungsebene in dem Getriebegehäuse (3, 23) angeordnet sind, **dadurch gekennzeichnet, dass** das Schneckenrad (12, 31) mehrere Exzenterbohrungen aufweist, die jeweils zu einer Rotationsachse des Schneckenrades (12, 31) unterschiedlich beabstandet angeordnet sind.

2. Scheibenwischervorrichtung (1, 21) nach Anspruch 1, **dadurch gekennzeichnet, dass** der Steg (8, 28) und das von dem Wischermotor (2, 22) insbesondere über eine Ankerwelle (36) angetriebenes Schneckenrad (12, 31) über die Schubstange (6, 26) gelenkig miteinander verbunden sind.

3. Scheibenwischervorrichtung (1, 21) nach einem der vorhergehenden Ansprüche, **dadurch gekennzeichnet, dass** der Steg (8, 28) und das Ritzel (10, 33) und/oder das Schneckenrad (12, 31) so in das Getriebegehäuse (3, 23) eingesetzt oder einsetzbar ist, dass mindestens ein Wandungsabschnitt (23a) des Getriebegehäuses (3, 23) eine Anschlagfläche zur Begrenzung der maximalen Auslenkung des Steges (8, 28) bilden.

4. Scheibenwischervorrichtung (1, 21) nach einem der Ansprüche 1 bis 3, **dadurch gekennzeichnet, dass** die Schubstange (6, 26) zur gelenkigen Verbindung mit dem Schneckenrad (12, 31) mit einem Gelenkbolzen (35) in mindestens eine in dem Schneckenrad (12, 31) vorgesehene Exzenterbohrung eingreift.

5. Scheibenwischervorrichtung (1, 21) nach einem der vorhergehenden Ansprüche, **dadurch gekennzeichnet, dass** ein Übersetzungsverhältnis zwischen Ritzel (10, 33) und Zahnsegment (9, 32) durch Wahl der Zahngeometrie einstellbar ist, insbesondere durch Vergrößerung der Zahndicke der Zähne von Zahnsegment (9,32) und/oder Ritzel (10, 33) gesteigert werden kann.

6. Scheibenwischervorrichtung (1, 21) nach einem der vorhergehenden Ansprüche, **dadurch gekennzeichnet, dass** in dem Getriebegehäuse (3, 23) unterhalb des Steges (8, 28) eine kreisbogenförmige Vertiefung (34) ausgebildet ist, in welche ein an dem Steg (8, 28) angeordneter Vorsprung zur Stabilisierung der gleichförmigen Drehbewegung des Steges (8, 28) und/oder zur Beibehaltung der Beabstandung von Steg (8, 28) und Ritzel (10, 33) eingreift.

7. Scheibenwischervorrichtung (1, 21) nach einem der vorhergehenden Ansprüche, **dadurch gekennzeichnet, dass** in dem Getriebegehäuse (3, 23) unterhalb des Steges (8, 28) ein kreisbogenförmiger Vorsprung ausgebildet ist, wobei ein an dem Steg (8, 28) komplementär ausgebildeter Vorsprung zur Stabilisierung der gleichförmigen Drehbewegung des Stegs (8, 28) und/oder zur Beibehaltung der Beabstandung von Zahnsegment (9, 32) und Ritzel (10, 33) den Vorsprung hintergreift.

## Claims

1. Windscreen wiper device (1, 21), in particular for a rear windscreen wiper of a motor vehicle, with a wiper motor (2, 22) which, via a gear arrangement accommodated in a gear housing (3, 23), drives an output shaft (4, 24), which actuates a wiper lever, wherein, in order to transfer a rotary movement of the wiper motor (2, 22) into a oscillating rotational movement of the output shaft (4, 24), the gear arrangement has a conversion gear (5, 25) which comprises a connecting rod (6, 26) and a web (8, 28), which is connected to the connecting rod (6, 26) in an articulated manner and keeps a toothed segment equidistantly from a pinion (10, 33) which is connected to the output shaft (24) for rotation therewith and with which the toothed segment meshes, wherein the web is mounted rotatably in a fixed position in the gear housing (3, 23) at a distance from an axis of rotation of the output shaft (4, 24), wherein the web (8, 28) and the pinion (10, 33) and/or a worm wheel (12, 31) and/or the armature shaft (36) are arranged in the gear housing (3, 23) in a common plane, in particular in a common force transmission plane, **characterized in that** the worm wheel (12, 31) has a plurality of eccentric bores which are each arranged at a different distance from an axis of rotation of the worm wheel (12, 31).

2. Windscreen wiper device (1, 21) according to Claim 1, **characterized in that** the web (8, 28) and the worm wheel (12, 31), which is driven by the wiper motor (2, 22), in particular via an armature shaft (36), are connected to each other in an articulated manner via the connecting rod (6, 26).

3. Windscreen wiper device (1, 21) according to either of the preceding claims, **characterized in that** the web (8, 28) and the pinion (10, 33) and/or the worm wheel (12, 31) are/is inserted or are/is insertable into the gear housing (3, 23) in such a manner that at least one wall section (23a) of the gear housing (3, 23) forms a stop surface for limiting the maximum deflection of the web (8, 28).

4. Windscreen wiper device (1, 21) according to one of Claims 1 to 3, **characterized in that**, for the articulated connection to the worm wheel (12, 31), the connecting rod (6, 26) engages by means of a hinge pin (35) in at least one eccentric bore provided in the worm wheel (12, 31).

5. Windscreen wiper device (1, 21) according to one of the preceding claims, **characterized in that** a transmission ratio between pinion (10, 33) and toothed segment (9, 32) is adjustable by selection of the tooth geometry, and in particular can be increased by increasing the tooth thickness of the teeth of toothed segment (9, 32) and/or pinion (10, 33).

6. Windscreen wiper device (1, 21) according to one of the preceding claims, **characterized in that** a circular-arc-shaped depression (34) is formed below the web (8, 28) in the gear housing (3, 23), in which depression a projection, which is arranged on the web (8, 28), engages in order to stabilize the uniform rotational movement of the web (8, 28) and/or in order to maintain the spacing of web (8, 28) and pinion (10, 33).

7. Windscreen wiper device (1, 21) according to one of the preceding claims, **characterized in that** a circular-arc-shaped projection is formed below the web (8, 28) in the gear housing (3, 23), wherein a projection, which is formed in a complementary manner on the web (8, 28), engages behind the projection in order to stabilize the uniform rotational movement of the web (8, 28) and/or in order to maintain the spacing of toothed segment (9, 32) and pinion (10, 33).

## Revendications

1. Dispositif d'essuie-glace (1, 21), en particulier pour un essuie-glace arrière d'un véhicule automobile, avec un moteur d'essuie-glace (2, 22), qui entraîne un arbre de sortie (4, 24) actionnant un levier d'essuie-glace via un ensemble de transmission installé dans un boîtier de transmission (3, 23), dans lequel l'ensemble de transmission présente, pour la transmission d'un mouvement de rotation du moteur d'essuie-glace (2, 22) dans un mouvement de rotation oscillant de l'arbre de sortie (4, 24), un mécanisme de conversion (5, 25) qui comprend une bielle (6, 26) et une entretoise (8, 28) reliée de façon articulée à la bielle (6, 26), qui porte un segment denté à équidistance d'un pignon (10, 33) calé sur l'arbre de sortie (24), avec lequel le segment denté engrène, dans lequel l'entretoise est montée de façon rotative en position stationnaire dans le boîtier de transmission (3, 23) à distance d'un axe de rotation de l'arbre de sortie (4, 24), dans lequel l'entretoise (8, 28) et le pignon (10, 33) et/ou une roue à vis (12, 31) et/ou l'arbre d'induit (36) sont disposés dans un plan commun, en particulier dans un plan de transmission de force commun dans le boîtier de transmission (3, 23), **caractérisé en ce que** la roue à vis (12, 31) présente plusieurs alésages excentriques, qui sont respectivement situés à des distances différentes d'un axe de rotation de la roue à vis (12, 31).

2. Dispositif d'essuie-glace (1, 21) selon la revendication 1, **caractérisé en ce que** l'entretoise (8, 28) et la roue à vis (12, 31) entraînée par le moteur d'essuie-glace (2, 22) en particulier via un arbre d'induit (36) sont reliés l'un à l'autre de façon articulée au moyen de la bielle (6, 26).

3. Dispositif d'essuie-glace (1, 21) selon l'une des revendications précédentes, **caractérisé en ce que** l'entretoise (8, 28) et le pignon (10, 33) et/ou la roue à vis (12, 31) sont ou peuvent être installés dans le boîtier de transmission (3, 23), de telle manière qu'au moins une portion de paroi (23a) du boîtier de transmission (3, 23) forme une face de butée pour la limitation de la déviation maximale de l'entretoise (8, 28) .

4. Dispositif d'essuie-glace (1, 21) selon l'une quelconque des revendications 1 à 3, **caractérisé en ce que** la bielle (6, 26) s'engage avec un axe d'articulation (35) dans au moins un alésage excentrique prévu dans la roue à vis (12, 31) en vue de la liaison articulée avec la roue à vis (12, 31).

5. Dispositif d'essuie-glace (1, 21) selon l'une quelconque des revendications précédentes, **caractérisé en ce qu'**un rapport de démultiplication entre le pignon (10, 33) et le segment denté (9, 32) est réglable par le choix de la géométrie des dents, en particulier peut être augmenté par un accroissement de l'épaisseur de dent des dents du segment denté (9, 32) et/ou du pignon (10, 33).

6. Dispositif d'essuie-glace (1, 21) selon l'une quelconque des revendications précédentes, **caractérisé en ce qu'**un creux en forme d'arc de cercle (34) est formé dans le boîtier de transmission (3, 23) en dessous de l'entretoise (8, 28), dans lequel une saillie disposée sur l'entretoise (8, 28) s'engage pour la stabilisation du mouvement de rotation uniforme de l'entretoise (8, 28) et/ou pour le maintien de la distance entre l'entretoise (8, 28) et le pignon (10, 33).

7. Dispositif d'essuie-glace (1, 21) selon l'une quelconque des revendications précédentes, **caractérisé en ce qu'**une saillie en forme d'arc de cercle est formée dans le boîtier de transmission (3, 23) en dessous de l'entretoise (8, 28), dans lequel une saillie complémentaire formée sur l'entretoise (8, 28) s'accroche derrière la saillie pour la stabilisation du mouvement de rotation uniforme de l'entretoise (8, 28) et/ou pour le maintien de la distance entre le segment denté (9, 32) et le pignon (10, 33).
